# EUROPEAN PATENT APPLICATION

(11) **EP 0 937 638 A2**
(43) Date of publication of application: **25.08.1999**
(21) Application number: 99103417.4
(22) Date of filing: 19.02.1999
(51) Int. Cl.: B62M 23/02

(54) **Two-wheeled vehicle**

(30) Priority: 19.02.1998 JP 3711098
(71) Applicant: YAMAHA HATSUDOKI KABUSHIKI KAISHA, Iwata-shi Shizuoka-ken, 438 (JP)
(72) Inventor: Laimböck, Franz, c/o Technische Universität Graz, 8010 Graz (AT); Trigg, Robert V., c/o Yamaha Motor Europe N.V., 1119 NC Schiphol-Rijk, P.O.Box 75033 (NL)
(74) Representative: Grünecker, Kinkeldey, Stockmair & Schwanhäusser Anwaltssozietät

(57) **Abstract**

For the provision of a two-wheeled vehicle with an engine that is small in vehicle width, compact, and free from soiling clothes, a rear wheel (21) is constituted with a disk wheel with its spoke portion (31) displaced toward one side. A shell (22) is secured to a vehicle body frame (3) so as to cover the spoke portion (31) from the opposite side in the vehicle width direction. An engine (23), an air cleaner (25), a silencer (24), and a fuel tank are arranged around the hub of the rear wheel in a row along the circumferential direction of the rear wheel. The crankshaft (43) and the output shaft (63) of the engine are disposed with their axial lines directed in the vehicle width direction, and with the output shaft coupled to the hub through a transmitting device.

## Description

This invention relates to a two-wheeled vehicle with a body frame, a front wheel and a rear wheel rotatably supported on said body frame.

The two-wheeled vehicle propelled by human power, namely the bicycle, in comparison with the motorcycle, is compact with a small vehicle width, free from problems of soiling clothes with fuel, engine oil, etc. However, a large effort is required of the rider on an uphill or the like, and the rider is likely to become fatigued.

As a solution to the fatigue problem, there is the electric motor-assisted bicycle. However, since the electric motor-assisted bicycle requires electricity supplied from the battery to the electric motor, the distance range that can be covered with the electric motor-assisted bicycle is much shorter than that of the motorcycle. Another problem that detracts from the convenience of the electric motor-assisted bicycle is that the battery has to be charged once in several days.

The inventors intend to solve the problems associated with the electric motor-assisted bicycle by mounting an engine on a bicycle.

However, to make the bicycle capable of running also with the engine power, there is the problem of layout of the engine and auxiliary devices. That is, the special advantage of the bicycle, that being compact and free from soiling of clothes should not be impaired.

Accordingly, it is an objective of the invention to provide a two-wheeled vehicle with engine that is compact with a small vehicle width and free from soiling of clothes.

This objective is solved for a two-wheeled vehicle as indicated above in an inventive manner in that an internal combustion engine for driving said vehicle is housed inside the rotation locus of one of said wheels.

Further advantages of the inventive two-wheeled vehicle are laid down in the subclaims.

According to an embodiment of the invention described above, since the engine and the auxiliary devices can be all housed inside the rotation locus of the rear wheel, a compact two-wheeled vehicle is provided even if the engine is mounted on the vehicle. In particular, since the engine and the auxiliary devices are arranged along the circumferential direction of the rear wheel to allow the width of the rear wheel in the vehicle width direction to be minimum, a two-wheeled vehicle having a small width is provided even if the engine is mounted on the vehicle.

Furthermore, since the engine and the auxiliary devices are covered with the rear wheel and the shell, there is no possibility of the rider's clothes contacting those components and the clothes therefore cannot be soiled with any fuel or engine oil. Furthermore, since the load shared on the front wheel is small, the front wheel can be easily lifted when negotiating a curbstone or the like.

In that the engine cylinder is disposed more forward of the vehicle body than the hub and the transmission case of the engine having the output shaft is disposed beneath the hub, the hub is located in the otherwise unused space in the corner which is surrounded by the cylinder and the transmission case.

As a result, the engine may be disposed close to the hub by utilizing the otherwise unused space around the engine, the capacities or volumes of the air cleaner, the silencer, and the fuel tank accommodated therein can be made large, and the engine and the auxiliary devices may be arranged compactly in the radial direction of the rear wheel.

Furthermore, in that the oil pump is coupled through the eccentric type rotation transmitting mechanism to the end of the cantilever type crankshaft on the opposite side of the crank arm, in comparison with the case using a crankshaft supported on its both ends, the crankshaft length in the axial direction can be made shorter, and the size of the engine does not increase in the axial direction of the crankshaft even with the constitution in which the eccentric type rotation transmitting mechanism is coupled to the end portion of the crankshaft.

This further helps reduce the width of the rear wheel. Furthermore, since the centrifugal clutch and the speed reduction gears are located on one side in the vehicle width direction while the eccentric type rotation transmitting mechanism and the oil pump are located on the other side, heavy components are distributed on both sides in the vehicle width direction so that the weights on the rear wheel can be easily balanced.

Since the portions occupying on the rim side of the air cleaner, the silencer, and the fuel tank are formed in an arcuate shape in side view, the sizes of the air cleaner, the silencer, and the fuel tank can be increased up to the outside edge in the radial direction of the space formed inside the rear wheel.

Therefore, the air cleaner, the silencer, and the fuel tank can be formed as large as possible in the radial direction of the rear wheel to increase the capacities of those components as much as possible.

According to an embodiment in which the portions occupying on both sides in the vehicle width direction of the air cleaner, the silencer, and the fuel tank are formed in the arcuate shape in cross section along the inside surfaces of the spoke portion of the rear wheel and the shell, the air cleaner, the silencer, and the fuel tank can be formed large, in the vehicle width direction, up to the outside edge of the space formed inside the rear wheel.

Therefore, the air cleaner, the silencer, and the fuel tank may be formed as large as possible in the vehicle width direction of the rear wheel to increase the capacities of those components as much as possible.
[0084]

Moreover, since the pedal crankshaft for human power drive is rotatably provided on the vehicle body frame, and the chain type transmitting device, in the middle of which the output shaft of the engine is coupled, is interposed between the pedal crankshaft and the rear wheel hub, the two-wheeled vehicle of this invention, when the engine is not in operation is driven by human power resulted from depressing the pedals by the rider, and when the engine is in operation, it is driven either by the engine only or by both of the human power and engine power.

Therefore, a bicycle with engine is provided to be compact and small in the vehicle width, and not to soil clothes. Furthermore, since the engine output and the human power to be respectively transmitted to the reduction and speed-up gear are transmitted to the driven sprocket through a common chain, the number of components is reduced and the components are arranged to be compact.

In that the self-contained type multistage transmission is interposed in the power transmitting path between the driven sprocket and the hub, both of the rotation from human power and the rotation from engine power can be changed in speed with the single self-contained type multistage transmission.

As a result, since it is not necessary to provide a speed changing device on the engine side (a transmission dedicated for changing the speed of the engine power), the rear wheel may be formed to be compact even with the constitution in which the engine is mounted on the rear wheel of the bicycle.

Since the engine, the air cleaner, the silencer, and the fuel tank are supported on the vehicle body frame through the supporting bracket disposed between the spoke portion of the rear wheel and the shell, the engine and the auxiliary devices can be easily removed from the vehicle body frame by removing the supporting bracket together with the rear wheel from the vehicle body frame.

Namely, the engine and the auxiliary devices can be easily mounted or dismounted, and maintenance work for them can be made easily in the state they are removed from the vehicle body frame. Furthermore, the engine and the auxiliary devices can be retrofit easily to existing bicycles.

As a consequence of the cylinder and the silencer being disposed on the rear wheel spoke portion side by means of the sector-shape supporting bracket, the supporting bracket is superimposed on the vehicle body frame in side view, and the bracket can be directly attached to the vehicle body frame. This simplifies the structure for detachably attaching the support frame to the vehicle body frame. Furthermore, since the supporting bracket is located by the side of the cylinder and the silencer where the temperature reaches the highest, the supporting bracket prevents the heat from being transmitted to the shell.

Therefore, the supporting bracket can be made small in size, and the small supporting bracket may be utilized to prevent the shell from being heated.

Moreover, since the engine cylinder and the silencer are located on one of front and rear sides of the vehicle body while the air cleaner and the fuel tank are located on the other side, since the heat emitting components and components that should avoid heat can be disposed separately in front-rear directions of the vehicle body, the air cleaner and the fuel tank are less likely to be heated even with the structure in which the engine and the auxiliary devices are housed within the rotation range of the rear wheel.

Also, since the cylinder is disposed before the hub while the air cleaner and the fuel tank are disposed behind the hub, since the heat emitted from the cylinder toward the air cleaner and the fuel tank is blocked with the hub, resulting that the component of the rear wheel serves as a heat insulator.

Therefore, a dedicated heat insulating member is not required for preventing the heat of the cylinder from reaching the air cleaner and the fuel tank. This makes it possible to protect the air cleaner and the fuel tank from heat without increasing the number and weight of components. Another advantage is a good cooling effect because the wind caused as the vehicle runs strikes first the cylinder and the silencer.

Because a gap is formed between the rear wheel and the shell through which the wind caused as the vehicle runs flows in and out, the wind flows in and out through the large gap extending along the entire circumference of the rear wheel when the vehicle runs. Therefore, the engine and the silencer are efficiently cooled with the wind caused as the vehicle runs, even with the constitution in which the engine and the auxiliary devices are covered with the shell and the rear wheel.

According to this embodiment, since the wind caused as the vehicle runs flows in and out through the large gap extending over the entire circumference of the rear wheel, the engine and silencer are efficiently cooled.

An embodiment of a two-wheeled vehicle according to the invention will be hereinafter described in detail in reference to the appended figures, wherein:
FIG. 1 is a perspective view of a two-wheeled vehicle according to the invention,
FIG. 2 is a side view, as seen from the right side of the vehicle, of a rear wheel with its shell removed,
FIG. 3 is a side view of a transmission case of the engine, silencer, and air cleaner in the state of their inside being exposed,
FIG. 4 is a side view of the engine and auxiliary devices as seen from the left side of the vehicle body,
FIG. 5 is a perspective view showing the general constitution of the engine and auxiliary devices,
FIG. 6 is a perspective view showing the general constitution of the transmission device,
FIG. 7 is the view of the section VII-VII of the engine in FIG. 3,
FIG. 8 is the view of the section VIII-VIII of the engine in FIG. 3,
FIG. 9 is a vertical cross-sectional view of the engine,
FIG. 10 is a vertical cross-sectional view of the rear wheel, showing the section X-X in FIG. 2,
FIG. 11 is a transverse cross-sectional view of a hub, and
FIG. 12 is a side view of a supporting bracket.

In these drawings, the symbol 1 denotes the two-wheeled vehicle of this embodiment. This two-wheeled vehicle 1 is constituted with a bicycle with its rear wheel provided with an engine type driving device 2. The vehicle body frame 3 of this two-wheeled vehicle 1 is the same as that for bicycles, and comprises; a head pipe 4, a top tube 5, a down tube 6, a seat tube 7, a chain stay 8, a seat stay 9, and a bottom bracket 10. A front fork 11 is supported for rotation on the head pipe 4. A front wheel 12 is supported for rotation on the front fork 11, while handlebars 13 are secured to the front fork 11.

A saddle 14 is attached to the top end portion of the seat tube 7. A pedal crankshaft 15 for human power drive is rotatablly supported with the bottom bracket 10 welded to the bottom end of the seat tube 7 and to the bottom end of the down tube 6. Cranks 17, each having a pedal 16, are secured to the pedal crankshaft 15. The pedal crankshaft 15 is provided with a drive sprocket 18. A chain 19 is routed around the sprocket 18 which is mounted on the pedal crankshaft 15 through a one-way clutch (not shown) . The one-way clutch is constituted to permit the running of the chain 19 in the state of the pedal crankshaft 15 not being rotated.

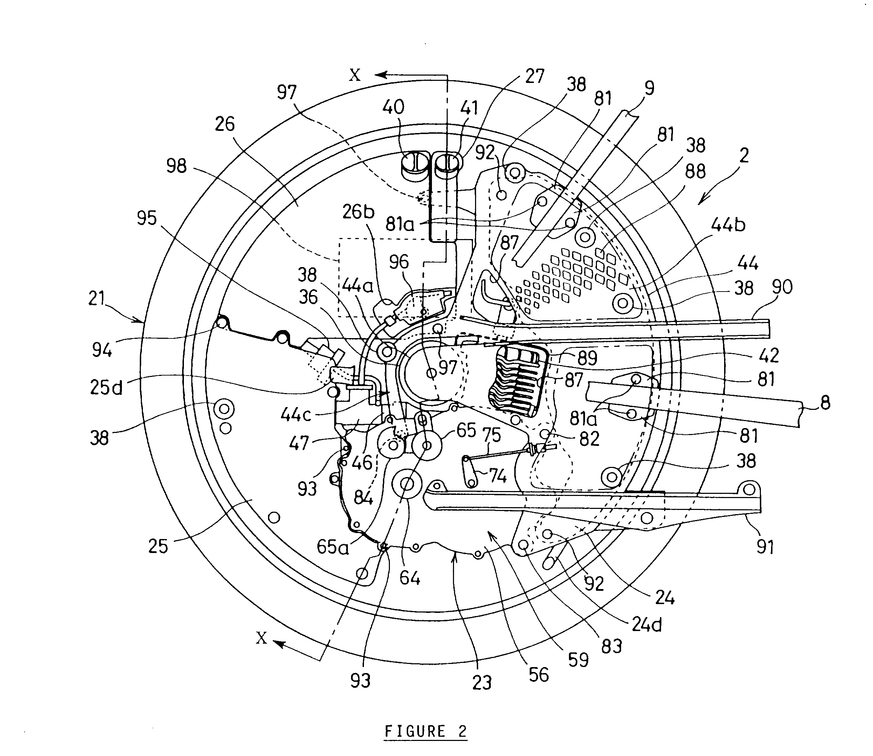

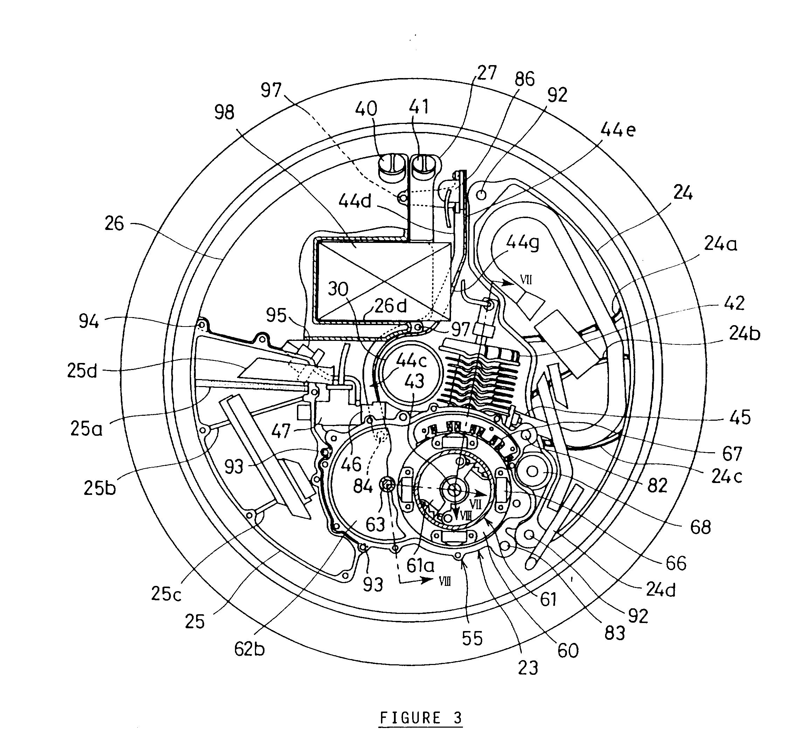

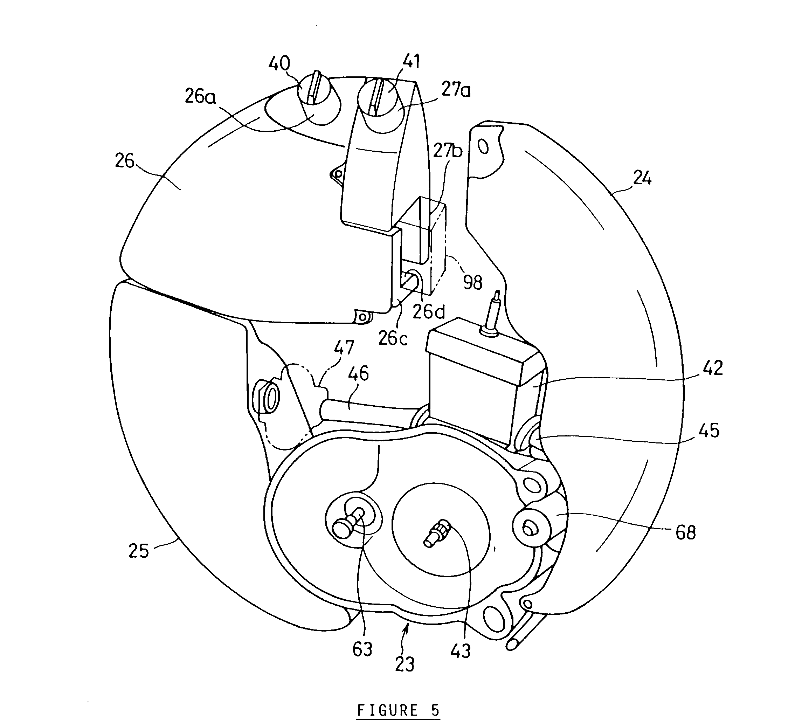

The engine type driving device 2 comprises; a rear wheel 21 rotatablly mounted on the vehicle body frame 3, a shell 22 attach to the vehicle body frame 3 side, and, as shown in FIG. 2, an engine 23 and auxiliary devices housed inside the rear wheel 21. The auxiliary devices include as shown in FIGs. 3 and 5; a silencer 24 located more forward of the vehicle body than the engine 23, an air cleaner 25 located behind the engine 23, and; a fuel tank 26 and an oil tank 27 located above the air cleaner 25. In this embodiment as shown in FIG. 5, the engine 23 and the auxiliary devices are arranged in a curved row along the circumferential direction of the rear wheel 21.

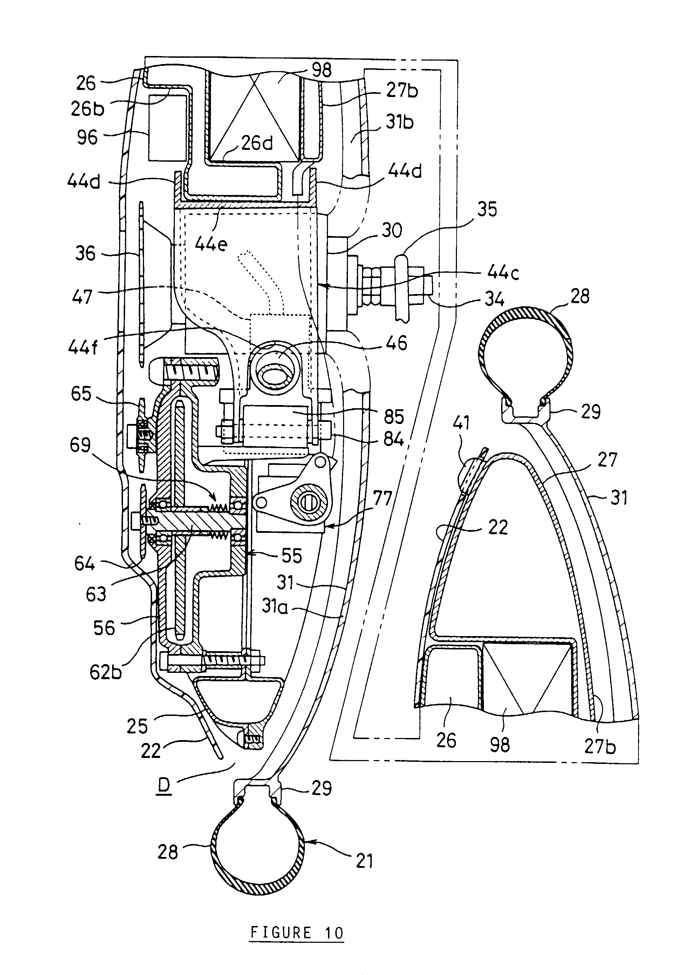

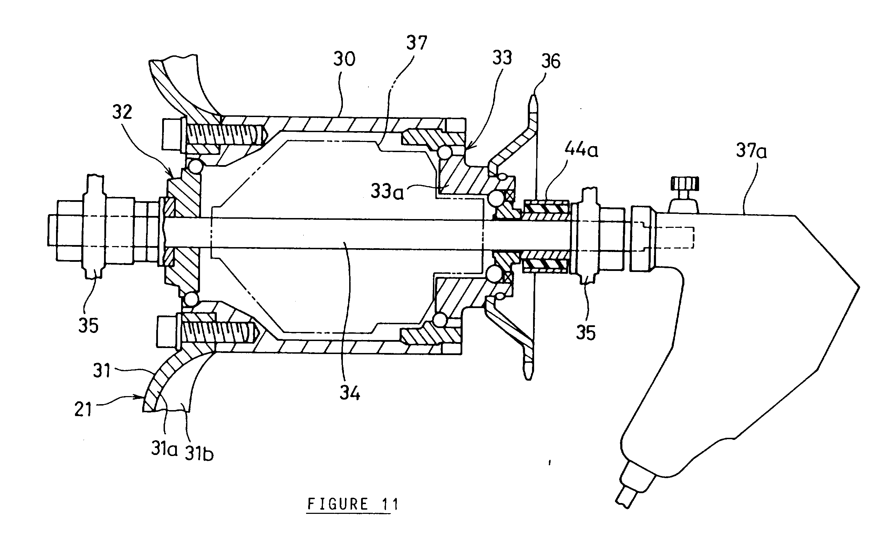

The rear wheel 21 is of a disk wheel type as shown in FIG. 10 comprising a spoke portion 31 disposed between an outside circumferential rim 29 for fitting a tire 28 and a hub 30 located in the axis area, and displaced to the left side of the vehicle, with the hub 30 being rotatablly supported on a wheel shaft 34 though bearings 32 and 33 as shown in FIG. 11. The spoke portion 31, together with the rim 29, is formed by aluminum die-casting and consists of a disk-shaped main part 31a and ribs 31b projecting from the main part 31a toward the right side of the vehicle body. The wheel shaft 34 penetrates and is secured to an end plate 35 welded to the end portions of the chain stay 8 and the seat stay 9. And yet, the end plate 35 is provided with a notch opening downward for removing the wheel shaft 34 together with the rear wheel 21, by drawing it first downward and then toward the rear of the vehicle.

That is to say, the rear wheel 21 is rotatablly supported on the vehicle body frame 3 through the bearings 32 and 33. Furthermore, the bearing 33 on the right side of the vehicle body for journaling the hub 30 is provided with an intermediate rotary member 33a which is rotatable relative to the hub 30 and the wheel shaft 34. The intermediate rotary member 33a secures the driven sprocket 36 girdled with the chain 19 to the end portion on the right side of the vehicle body and is connected to the hub 30 through a self-contained type multistage transmission 37 housed in the hub 30. The self-contained type multistage transmission 37 is of the conventionally known type using a planetary gear mechanism (not shown), and of a constitution in which a rod (not shown) passing through the center of the wheel shaft 34 is caused to make parallel movement by means of a drive mechanism 37a on the right side of the vehicle body. Furthermore, the self-contained type multistage transmission 37 is arranged to change speed by operating a speed changing lever (not shown) provided on one of the steering handlebars 13.

The shell 22 is made of a plastic material and comprises three parts: a small shell 22a covering a triangular area between the chain stay 8 and the seat stay 9, a large shell 22b over the rest of the large portion, and a cap housing portion shell 22c covering the area around the fuel filler pipes 26a and 27a of the fuel tank and the oil tank which will be described later. The shell 22 is formed in a disk shape and attached to the vehicle body frame so as to cover the spoke portion 31 of the rear wheel 21 from the right side of the vehicle body. The shell 22 is detachably attached, after attaching the rear wheel 21 to the vehicle body frame 3, to the components housed inside the rear wheel 21. The structure for detachably attaching the shell 22 is employed that engaging projections of the shell 22 are fitted in the vehicle width direction into rubber grommets attached to the components on the supporting side. The rubber grommets in this embodiment are provided as shown in FIG. 2 with the symbols 38, and two pieces of the grommet are disposed between the chain stay 8 and the seat stay 9 inside the rear wheel 21, and four pieces in their outside area; at the upper portion, vehicle body forward side, vehicle body rear side, and the center. And yet, the entire shell 22 may be formed as a single body. In the case of employing such a constitution, the assembly is made in the sequence of attaching the shell 22 to the rear wheel 21 side in advance, followed by attaching the rear wheel 21 to the vehicle body frame 3.

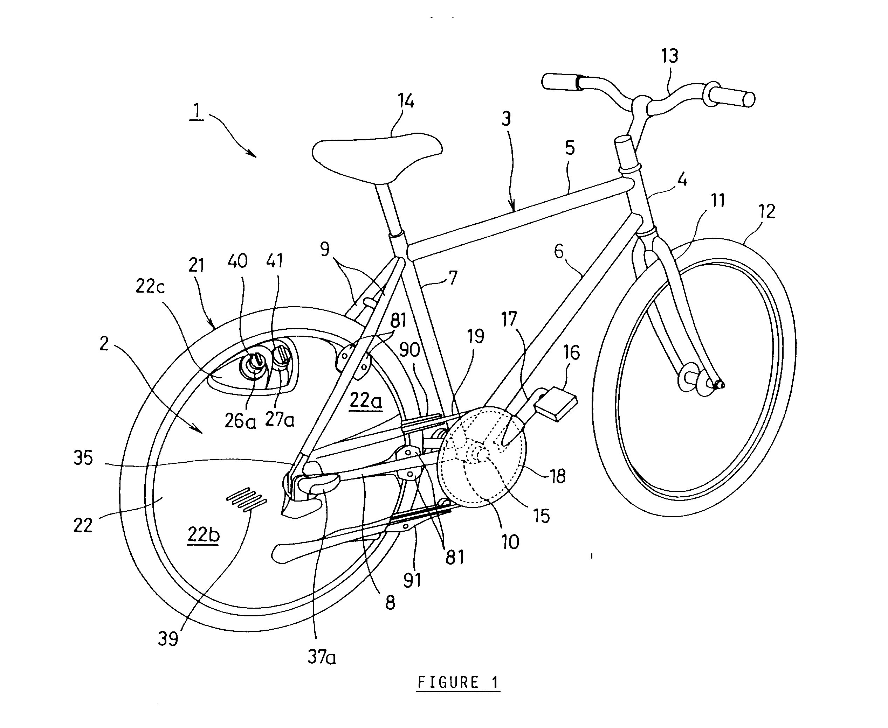

The shell 22 has two structural features to prevent the heat emitted from the engine 23, etc. from accumulating in its inside. First, air holes 39 (FIG. 1) for interconnecting the inside and outside of the shell 22 are formed more rearward of the vehicle body than the wheel shaft 34. Second, a gap is formed between the rim 29 of the rear wheel 21 and the shell 22 along their entire circumferences so that the wind caused as the vehicle runs can flow in and out. The gap is provided with a symbol D in FIG. 10.

The symbols 40 and 41 located in the upper part of the shell 22 are filler caps attached to fuel filler pipes 26a and 27a (FIG. 2) of the fuel tank 26 and the oil tank 27, respectively. The fuel filler pipes 26a and 27a pass the through holes formed in the cap housing section shell 22c and are exposed outside.

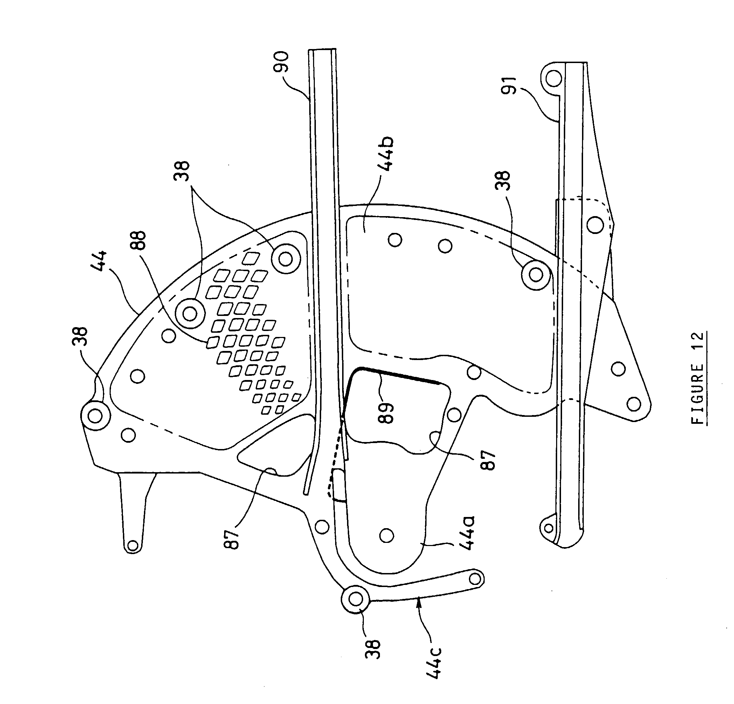

The engine 23 is of a long-stroke, air-cooled, 2-cycle, single-cylinder type. As shown in FIG. 3, the cylinder 42 is disposed more forward of the vehicle body than the hub 30, with the cylinder axis directed obliquely up forward. The crankshaft 43 is located below the hub 30, with its axial line directed in the vehicle width direction. As shown in FIGs. 2 and 12, the engine 23 is supported with the chain stay 8 and the seat stay 9 through a supporting bracket 44 made by aluminium die casting. The silencer 24 is connected through an exhaust pipe 45 to the vehicle body forward side of the cylinder 42. A carburetor 47 and the air cleaner 25 are connected through an intake pipe 46 to the vehicle rear side of the cylinder 42.

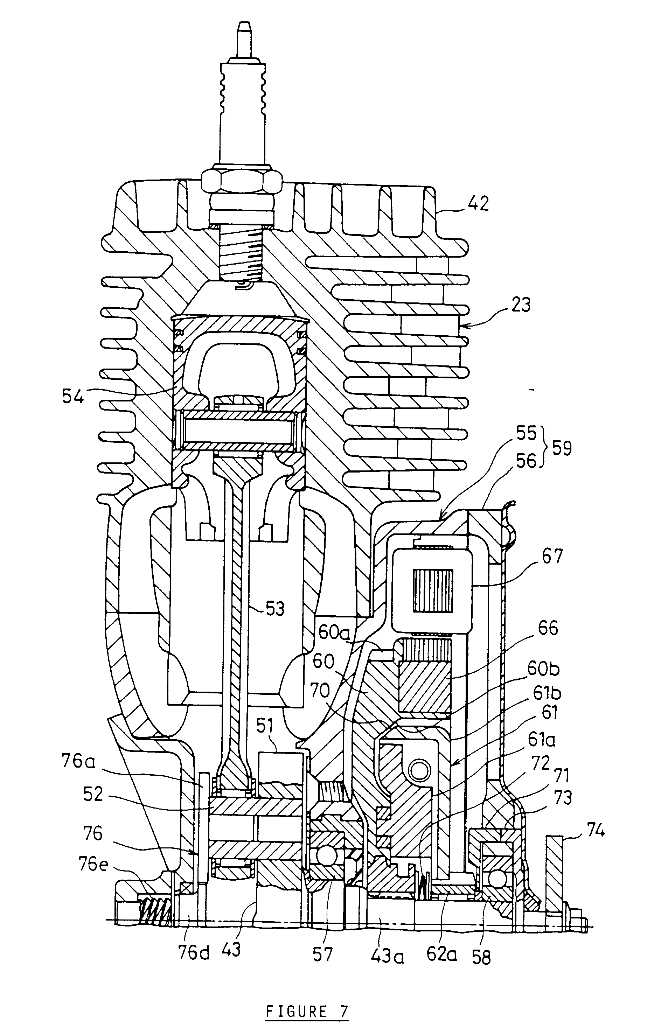

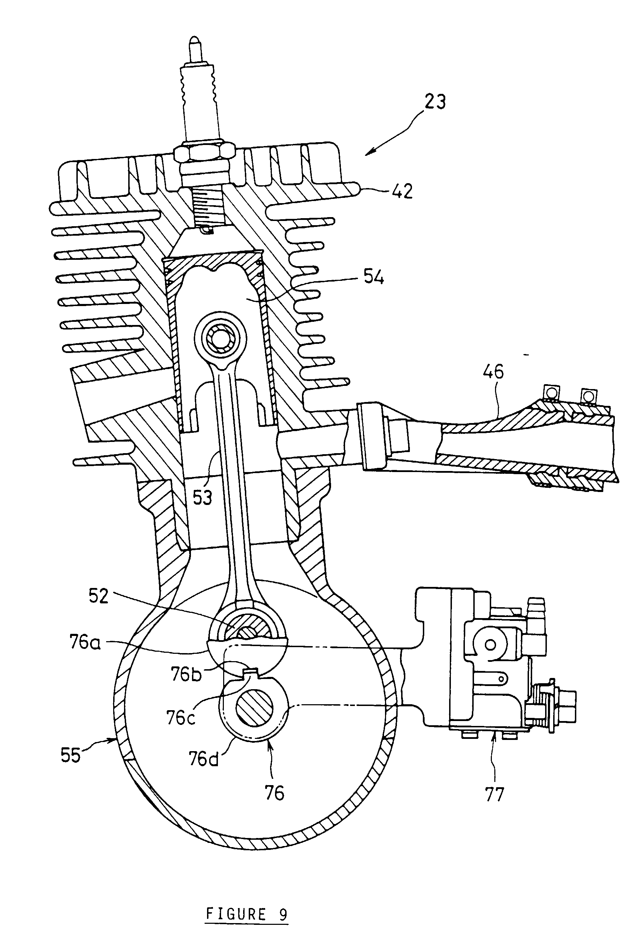

The crankshaft 43 of the engine 23, as shown in FIGs. 7 through 9, is of a cantilever type with a crank arm 51 provided on the vehicle body right side only. A piston 54 is connected through a connecting rod 53 to a crank pin 52 projecting from the crank arm 51 toward the vehicle body left side. A shaft portion 43a projecting from the crank arm 51 toward the vehicle body right side is supported for rotation with the crankcase 55, and a cover 56 attached to the crankcase 55 through bearings 57 and 58, respectively.

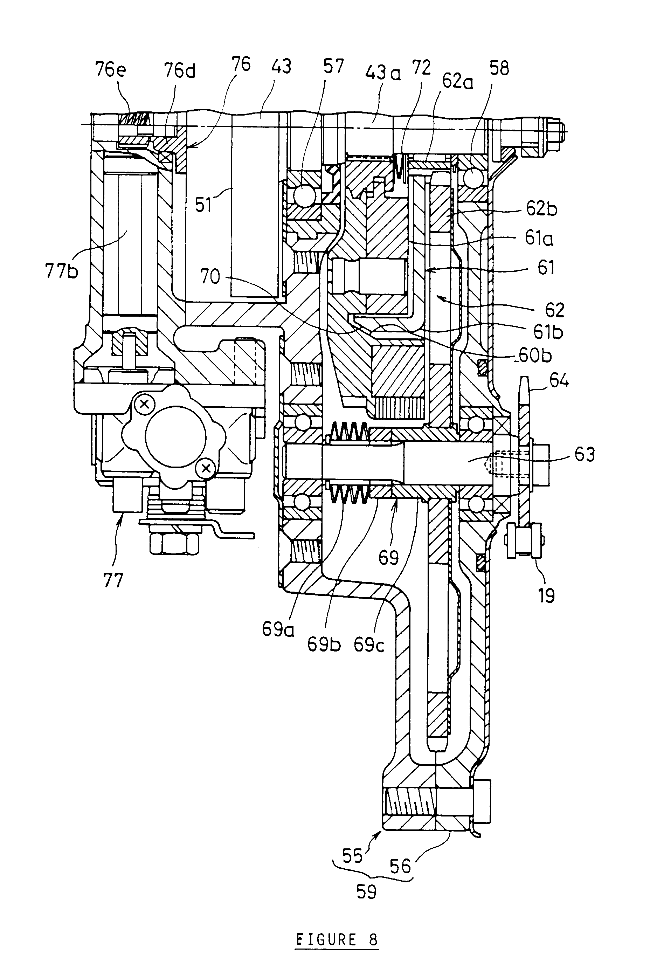

The crankcase 55 and the cover 56 constitute a transmission case 59 extending in the vehicle's front-rear direction below the hub 30. The transmission case 59 accommodates a flywheel 60, a centrifugal clutch 61, and a gear type speed reducer 62, and as shown in FIG. 8, supports for rotation the output shaft 63 of the engine 23 rotatablly. The output shaft 63 is provided to project toward the vehicle body right side from the cover 56 at a position more rearward of the vehicle body than the crankshaft 43, and connected to the crankshaft 43 through the gear type speed reducer 62 and the centrifugal clutch 61, and engages with an intermediate point on the chain 19 through an engine output sprocket 64 secured to its vehicle body right side end. As shown in FIGs. 2 and 10, a tension pulley 65 is disposed between the sprocket 64 and a driven sprocket 36 located on the hub 30 side. The tension pulley 65 is adapted to adjust the tension of the chain 19 by rotating a cam 65a shown in FIG. 2.

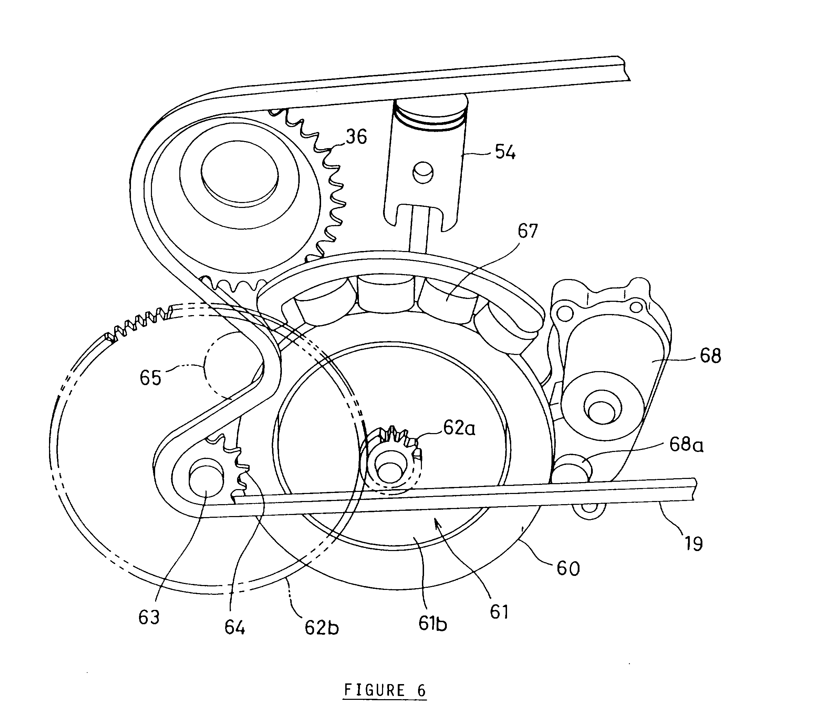

The axis area of the flywheel 60 is connected to the crankshaft 43. As shown in FIGs. 3 and 7, a permanent magnet 66 attached to the outside circumference of the flywheel 60 and a coil 67 disposed above the flywheel 60 constitute a generator. A ring gear 60a is formed integrally with the outside circumferential portion on the vehicle body right side of the flywheel 60 so as to engage with a pinion 68a of a starter motor 68 shown in FIGs. 3 and 6.

The centrifugal clutch 61 is of a constitution in which a clutch shoe 61a is made to come into contact with the inside circumferential surface of a drum 61b. As shown in FIGs. 7 and 8, the clutch shoe 61a is rotatablly mounted on the flywheel 60 and urged inward by means of a spring. The axial portion of the drum 61b is secured to a small diameter gear 62a supported for both rotation and axial movement on the crankshaft 43. The gear type speed reducer 62 is constituted with the small diameter gear 62a and a large diameter gear 62b meshing with the former.

The large diameter gear 62b of the gear type speed reducer 62, as shown in FIG. 8, is coupled to the output shaft 63 through a damper 69. The damper 69 is for preventing the transmission of impact loads and has a constitution in which a cam sliding piece 69b urged with a plate spring 69a for axial movement only engages with a cylinder 69c located on the large diameter gear 62b side through a cam surface.

With the power transmission system constituted as described above, power of the engine 23 is transmitted from the crankshaft 43 through the centrifugal clutch 61, the gear type speed reducer 62, the damper 69, the output shaft 63, and the sprocket 64 to the chain 19. From the chain 19, the power is further transmitted through the driven sprocket 36 and the self-contained type multistage transmission 37 to the hub 30 of the rear wheel 21. By the way, when the vehicle is coasting with the engine 23 stopped, rotation of the rear wheel 21 is transmitted up to the drum 61b of the centrifugal clutch 61 because the driven sprocket 36 rotates together with the rear wheel 21.

The reason for arranging the small diameter gear 62a of the gear type speed reducer 62 to be axially movable along the crank shaft 43 is to start the engine 23 by the inertia of the vehicle body while the vehicle is propelled with human power, by causing the drum 61b secured to the small diameter gear 62a to come into contact with the flywheel 60. That is, when the small diameter gear 62a having the drum 61b is moved from the position shown in FIG. 7 toward the vehicle body left side so that the sloping surface 70 of the opening side end portion of the drum 61b contacts the pressure receiving surface 60b of the flywheel 60, the rotation of the rear wheel 21 is transmitted from the drum 61b to the flywheel 60. As a result, the crankshaft 43 is rotated and the engine 23 is started.

The mechanism of moving the small diameter gear 62a in the axial direction as described above is constituted as shown in FIG. 7 with components including; a slider 71 supported for free movement in the vehicle width direction on the cover 56 to oppose the vehicle body right side end surface of the small diameter gear 62a, an arm 74 having a cam 73 for pushing the slider 71 and the small diameter gear 62a toward the vehicle body left side against the resilient force of a repulsive plate spring 72 as it is rotated about the axis of the crankshaft 43, and a starter cable 75 (FIG. 2) for rotating the arm 74. This mechanism is constituted that the starter cable 75 is pulled when a starter lever (not shown) provided on one of the steering handlebars 13 is operated, and the arm 74 is rotated to move the slider 71.

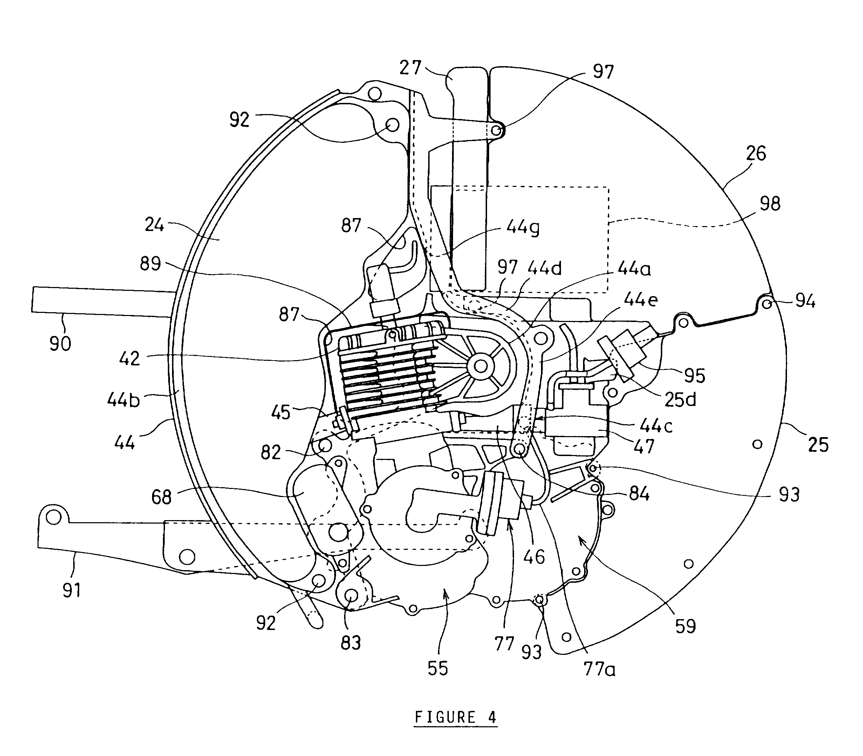

As shown in FIGs. 7 and 8, an oil pump 77 is connected to the crankshaft 43 of the engine 23 through an eccentric type rotation transmitting mechanism 76 on the vehicle body left side end of the crank pin 52, namely on the opposite side of the crank arm 51. The oil pump 77 for supplying lubrication oil to the engine 23 is attached as shown in FIG. 4 to the vehicle body left side of the crankcase 55, with its oil intake port connected to the oil tank 27 disposed above the engine 23, and with its oil delivery port connected to the intake pipe 46 through an oil pipe 77a sown in FIG. 4.

The eccentric rotation transmitting mechanism 76 is constituted, as shown in FIGs. 7 through 9, with a first disk 76a secured to the crank pin 52, and a worm shaft 76d having a projection 76c engaging with a notch 76b formed into the outside circumference of the first disk 76a. The worm shaft 76d is rotatablly supported on the vehicle body left side of the crankcase 55 so as to be coaxial with the crankshaft 43. A worm 76e formed at the vehicle body left side end of the worm shaft 76d is made to mesh with the input shaft 77b of the oil pump 77.

The supporting bracket 44 for mounting the engine 23 on the vehicle body frame 3 is of a generally sector shape in side view as shown in FIGs. 2, 4, and 12 so as to cover the cylinder 42 of the engine 23 and the silencer 24 located before the cylinder 42 from the vehicle body right side, and its cross-sectional shape in the vehicle width direction (the shape of the cross section produced with a vertically extending cutting surface and seen from the front of the vehicle) is generally arcuate and convex on the vehicle body right side. The supporting bracket 44, in the state of the wheel shaft 34 of the rear wheel 21 passing through the central part 44a as shown in FIG. 11, is secured to the end plate 35 of the vehicle body frame 3, and the vicinity of its outside circumferential portion 44b is secured to the chain stay 8 and the seat stay 9 on the vehicle body right side through an attachment plate 81 shown in FIGs. 1 and 2. The attachment plate 81 is welded to the chain stay 8 and the seat stay 9, and the supporting bracket 44 is detachably attached to the attachment plate 81 by means of screws 81a.

The sequence of attaching the engine 23 and the auxiliary devices to the vehicle body frame 3 through the supporting bracket 44 is as follows: First, the engine 23, the silencer 24, the air cleaner 25, the fuel tank 26, and the oil tank 27 are attached to the supporting bracket 44. Next, the rear wheel shaft 34 is passed through the central part 44a of the supporting bracket 44 to make a unit together with the rear wheel 21, and the unit is attached to the vehicle body frame 3.

In this case, the engine 23 is secured at three positions on the crankcase 55 at upper and lower areas on the vehicle body forward side, and at an upper area on the vehicle body rear side of the crankcase 55. The three securing bolts 82, 83, and 84 are shown in FIGs. 2 through 4. Of the three securing areas, the rear one is constituted that a connecting projection portion 85 provided in the upper area of the crankcase as shown in FIG. 10 is secured with securing bolts 84 to a rear extension portion 44c of the supporting bracket 44 formed to extend toward the vehicle body rear side over and beyond the hub 30 of the rear wheel 21.

The cross-sectional shape of the rear extension portion 44c is a sharp-cornered U shape opening toward the vehicle body rear side, with the securing bolts 84 penetrating both ends in the vehicle width direction of the vertical wall 44d. The plate portion 44e extending in the vehicle width direction of the rear extension portion 44c, and the vertical wall 44d on the vehicle body left side extend as shown in FIG. 4 to the upper end of the supporting bracket 44 so as to form the upper rear edge of the supporting bracket 44. As a result, the cross-sectional shape of the upper rear edge of the supporting bracket 44 is, as well as the rear extension portion 44c, the sharp-cornered U shape. In this embodiment, the inside portion of the sharp-cornered U shape cross section is used to attach a contact-point-less ignition unit 86 (FIG. 3) to the upper part of the supporting bracket 44.

The supporting bracket 44 is further provided as shown in FIG. 2 with two ventilation holes 87 in the vicinity of the cylinder 42, and with a large number of ventilation holes 88 in the area corresponding to the silencer 24. The ventilation holes 88 are formed over a wide area extending from upper to lower parts of the outside circumferential portion 44b of the supporting bracket 44. The range in which the ventilation holes 88 are formed is indicated with a dash-and-double-dotted line in FIG. 2. In this embodiment, the supporting bracket 44 is provided with an integrally formed wall 89 surrounding the cylinder 42 from the vehicle body forward side and from above so that the heat of the cylinder 42 is prevented from being transmitted forward and upward.

The supporting bracket 44 is further provided with a set of guides for preventing the chain 19 from swinging up and down. The guide set comprises an upper guide 90 formed integrally with the supporting bracket 44 and a lower guide 91 screw-secured to the supporting bracket 44.

The silencer 24 is formed to extend vertically at the front of the engine 23 from above the cylinder 42 of the engine 23 to a position below and the front of the crankcase 55, with its upper and lower end portions secured to the supporting bracket 44 by means of securing bolts 92. The silencer 24 is also provided with partition walls 24a, 24b, and 24c to form a plurality of expansion chambers therein, and is constituted to emit exhaust gas from a low-located tail pipe 24d to the inside of the shell 22.

The part of the silencer 24 located close to the rim 29 of the rear wheel 21 is formed as shown in FIG. 3 in an arcuate shape along the rim 29 as seen from the vehicle body right side. Furthermore, both walls on the vehicle width direction sides of the silencer 24 are formed in an arcuate cross sections as shown in FIG. 3 as seen from the vehicle body right side. The walls on both vehicle width direction sides of the silencer 24 are formed in an arcuate shape in cross section along the inside side surfaces of the spoke portion 31 and the shell 22 of the rear wheel 21.

The air cleaner 25 is formed as shown in FIGs. 2 and 3 to extend in the vertical direction behind the transmission case 59 of the engine 23, and is secured to the engine 23 at two positions on the vehicle body forward side using securing bolts 93, and to the fuel tank 26 at the upper rear end using a securing bolt 94. Inside the air cleaner 25 is provided an air cleaner element 25a, and is divided into a plurality of intake expansion chambers defined with partition walls 25b and 25c. An intake duct 25d is connected to the upstream side of the air cleaner element 25a. A carburetor 47 is connected to the intake expansion chamber on downstream side. The intake duct 25d projects from the front face of the air cleaner 25 toward the vehicle body forward side.

The part of the air cleaner 25 in the vicinity of the rim 29 of the rear wheel 21 is formed as shown in FIGs. 3 and 4 in an arcuate shape along the rim 29 as seen in side view. The side walls on both vehicle width direction sides of the air cleaner 25 are formed as shown in FIG. 10 in an arcuate shape in cross section along the inside surfaces of the spoke portion 31 and the shell 22 of the rear wheel 21.

The carburetor 47 connected to the air cleaner 25 is of a conventionally known type having a throttle valve and a float not shown, with fuel flowing down from the fuel tank 26 disposed above to the float chamber through an automatic fuel cock 95. The intake pipe 46 interconnecting the carburetor 47 and the engine 23 extends as shown in FIG. 10 from behind the rear extension portion 44c of the supporting bracket 44 through a cut 44f formed into the rear extension portion 44c toward the engine 23 side.

The throttle valve of the carburetor 47 is interlock-operated with a throttle grip (not shown) provided on one of the steering handlebars 13 through a throttle cable. In the middle of the throttle cable is interposed a throttle link 96 shown in FIGs. 2 and 10. The throttle link 96 is for varying the delivery rate of the oil pump 77 according to the opening degree of the throttle valve and is accommodated in a recess 26b formed in the vehicle body right side wall of the fuel tank 26.

The fuel tank 26, with its upper part connected to the fuel filler pipe 26a, is secured to the supporting bracket 44 at upper and lower parts on the vehicle body forward side using securing bolts 97, and is connected to the air cleaner 25 at the rear end on the vehicle body rear side. Securing of the fuel tank 26 to the supporting bracket 44 is made as shown in FIG. 10 in such a manner that the front part of the fuel tank 26 is supported with the plate portion 44e formed to extend in the vehicle width direction from the rear extension portion 44c of the supporting bracket 44.

The lower part of the fuel tank 26 on the vehicle body forward side is formed as shown in FIG. 5 to project more forward than the upper part. The forward projecting part is shown in FIG. 5 with the symbol 26c. In this embodiment, the oil tank 27 is disposed on the forward projecting part 26c. The lower part of the fuel tank 26 is formed with a recess 26d for housing and supporting a battery 98. The oil tank 27 is formed with a lower extension part 27b to cover the battery 98 placed in the recess 26d from the vehicle body left side.

The portions of the fuel tank 26 and the oil tank 27 in the vicinity of the rim 29 of the rear wheel 21 is formed as shown in FIGs. 3 and 4 in an arcuate shape in side view along the rim 29, and with their both vehicle width direction sides in an arcuate shape along the inside surfaces of the spoke portion 31 and the shell 22 of the rear wheel 21.

In this embodiment, as shown in FIG. 4, part of the plate portion 44c is formed with an opening 44g for accommodating the front lower corner of the battery 98 housed in the recess 26d of the fuel tank 26. This is to avoid interference of the front lower part of the battery 98 with the plate portion 44e extending in the vehicle width direction at the rear upper edge of the supporting bracket 44.

The two-wheeled vehicle 1 constituted as described above is propelled by human power when the pedal 16 is depressed in the state of the engine 23 is not operating, as the pedal force is transmitted to the hub 30 of the rear wheel 21 through the chain 19. The engine 23 may be started either by turning on the switch (not shown) of the starter motor 68 or rotating the flywheel 60 by operating the starter lever on the steering handlebars 13 side while the vehicle is moving. In the state of the engine revolution being low as during idling, since the centrifugal clutch 61 is disengaged, power of the engine 23 is not transmitted to the rear wheel 21.

When the engine revolution is raised by operating the throttle grip on the steering handlebars 13 side until the centrifugal clutch 61 is engaged, power of the engine 23 is transmitted from the centrifugal clutch 61, through the gear type speed reducer 62 and the output shaft 63, to the chain 19 to rotate the rear wheel 21 by the power of the engine 23. In this state, the vehicle may be driven either by the engine 23 power only with the pedaling stopped, or by both pedaling and the engine 23 power.

As described above, this two-wheeled vehicle 1 is constituted that, the rear wheel 21 is constituted as a disk wheel with its spoke portion displaced toward the left side of the vehicle, the shell 22 is secured to the vehicle body frame 3 so as to cover the spoke portion 31 from the right side of the vehicle, and the engine 23 and auxiliary devices (silencer 24, air cleaner 25, fuel tank 26, and oil tank 27) are arranged in a row along the circumferential direction of the rear wheel 21 around the hub 30 of the rear wheel 21 between the spoke portion 31 and the shell 22. As a result, the engine 23 and auxiliary devices are completely accommodated in side the locus of the rotating rear wheel 21.

Therefore, a compact bicycle may be provided, even if the engine 23 is mounted thereon. In particular, since the engine 23 and the auxiliary devices are arranged in a row along the circumferential direction of the rear wheel 21, the width of the rear wheel 21 in the vehicle width direction is made to a minimum. Since the engine 23 and the auxiliary devices are covered with the rear wheel 21 and the shell 22, there is no possibility of the rider's clothes contacting those components. Furthermore, since the load share on the front wheel 12 of this two-wheeled vehicle 1 (bicycle) is small, the front wheel 12 may be easily lifted as when negotiating a curbstone or the like.

Additionally, since the engine output and the human power to be respectively transmitted to the reduction and speed-up gear are transmitted to the driven sprocket through a common chain, the number of components is reduced to make the compact arrangement.

In this two-wheeled vehicle 1, the cylinder 42 of the engine 23 is located more forward of the vehicle body than the hub 30 of the rear wheel 21, and the transmission case 59 of the engine 23 having the output shaft 63 is located below the hub 30. As a result, the hub 30 is located in the corner space formed as surrounded with the cylinder 42 and the transmission case 59. Therefore, the engine 23 may be located close to the hub 30 by utilizing the otherwise unused space around the engine 23 so that the engine type driving device 2 may be arranged compact with respect to the radial direction of the rear wheel 21.

In this two-wheeled vehicle 1, the crankshaft 43 of the engine 23 is formed in the cantilever type. The end portion of the crankshaft 43 on the crank arm 51 side is connected to the output shaft 63 in the transmission case 59 through the centrifugal clutch 61 and the small diameter gear 62a which are coaxial with the crankshaft 43, and the large diameter gear 62b meshing with the small diameter gear 62a. The oil pump 77 is connected to the end of the crank pin 52 on the opposite side of the crank arm 51 through the eccentric type rotation transmitting mechanism 76. As a result, in comparison with the case of using a crankshaft supported on both ends, the axial length of the crankshaft 43 is shortened. Therefore, the size of the engine 23 does not increase in the axial direction of the crankshaft 43 even in the case the eccentric type rotation transmitting mechanism 76 is connected to the end portion of the crankshaft 43. Furthermore, since the centrifugal clutch 61 and the gear type speed reducer 62 are located on one side in the vehicle width direction while the eccentric type rotation transmitting mechanism 76 and the oil pump 77 are located on the other side thereof, heavy components are distributed on both sides in the vehicle width direction.

In this two-wheeled vehicle 1, portions of the silencer 24, the air cleaner 25, the fuel tank 26, and the oil tank 27 on the side of the rim 29 of the rear wheel 21 are formed in the arcuate shape in side view. As a result, the sizes of those components may be increased up to the radially outside edge of the space formed inside the rear wheel 21 so that they have large capacities.

In this two-wheeled vehicle 1, the cross sections of the portions on both sides in the vehicle width direction of the silencer 24, the air cleaner 25, the fuel tank 26, and the oil tank 27 are formed along the inside surfaces of the spoke portion 31 of the rear wheel 21 and the shell 22. As a result, those components may be formed to extend up to the outside edge in the vehicle width direction of the space formed inside the rear wheel 21 so that they have large capacities.

In this two-wheeled vehicle 1, the self-contained type multistage transmission 37 of the constitution that is accommodated in the hub 30 is interposed in the power transmitting path between the driven sprocket 36 of the rear wheel 21 and the hub 30. As a result, the rotation speed by the human power and the rotation speed by the engine power both may be changed with the single self-contained type multistage transmission 37 and therefore, no speed changing device is required on the engine 23 side.

In this two-wheeled vehicle 1, the supporting bracket 44 is disposed in the space between the spoke portion 31 of the rear wheel 21 and the shell 22 so as to be attached or removed as required. The engine 23, the silencer 24, the air cleaner 25, the fuel tank 26, and the oil tank 27 are supported on the vehicle body frame 3 through the supporting bracket 44. Therefore, the engine 23 and the auxiliary devices may be removed from the vehicle body frame 3 by removing the supporting bracket 44 together with the rear wheel 21 from the vehicle body frame 3.

As a result, the engine type driving device 2 that may be easily mounted or removed as required is provided. Another advantage is that maintenance work for the engine 23 and the auxiliary devices may be easily carried out in the state of those components being removed from the vehicle body frame 3. Furthermore, the engine type driving device 2 including the rear wheel 21 may be easily attached to existing bicycles.

In this two-wheeled vehicle 1, the supporting bracket 44 is formed generally in the sector shape in side view, with its central portion 44a together with the wheel shaft 34 of the rear wheel 21 being secured to the vehicle body frame 3, and with its vicinity of the outside circumferential portion 44b being secured to the chain stay 8 and the seat stay 9 of the vehicle body frame 3. The cylinder 42 of the engine 23 and the silencer 24 are disposed more inside of the vehicle body than the supporting bracket 44 (on the side of the spoke portion 31 of the rear wheel 21). As a result, the supporting bracket 44 is superimposed on the vehicle body frame 3 in side view, and the bracket 44 may be directly attached to the vehicle body frame 3. This simplifies the structure for detachably attaching the support frame 44 to the vehicle body frame 3. Furthermore, since the supporting bracket 44 is located by the side of the cylinder 42 and the silencer 24 where the temperature reaches the highest, the heat is blocked with the supporting bracket 44 before being transmitted to the shell 22.

In this two-wheeled vehicle 1, the cylinder 42 of the engine 23 and the silencer 24 are disposed on the front side of the vehicle body while the air cleaner 25 and the fuel tank 25 are disposed on the rear side of the vehicle body. As a result, the heat emitting components and components that should avoid heat may be disposed separately in front-rear directions of the vehicle body. Therefore, the air cleaner 25 and the fuel tank 26 are less likely to be heated even with the structure in which the engine 23 and the auxiliary devices are accommodated within the rotation range of the rear wheel 21.

In this two-wheeled vehicle 1, the cylinder 42 of the engine 23 is disposed more forward of the vehicle body than the hub 30 of the rear wheel 21 and the silencer 24 is disposed in front of the cylinder 42, while the air cleaner 25 and the fuel tank 26 are disposed behind the hub 30. As a result, the heat otherwise transmitted from the cylinder 42 to the air cleaner 25 and the fuel tank 26 is blocked with the hub 30, namely, the component of the rear wheel 21 serves as a heat insulator. This eliminates the need for a dedicated heat insulating member for preventing the heat of the cylinder 42 from reaching the air cleaner 25 and the fuel tank 26. Another advantage is a good cooling effect because the wind caused as the vehicle runs strikes first the cylinder 42 and the silencer 24.

In this two wheeled vehicle 1, since the large gap D is formed to extend along the entire circumference of the rear wheel 21 between the rear wheel 21 and the shell 22 so that the wind caused by the movement of the vehicle flows in and out freely through the gap D when the vehicle runs, and the engine 23 and the silencer 24 are efficiently cooled with the running wind.

While this embodiment is shown as the two-wheeled vehicle with the engine type driving device 2 so that the vehicle is propelled with the human power only, engine power only, or both of the human power and engine power, another constitution may be employed in which the human power system is omitted. In that case, the pedal 16 is omitted, fixed steps are provided on the vehicle body frame 3, and the chain 19 is routed between the output sprocket 64 and the driven sprocket 36.

In this embodiment, while a constitution is employed in which the revolution of the engine 23 is manually changed by operating the throttle grip, the engine 23 revolution may also be controlled to be in proportion to the pedal depressing force. In that case, for example, a constitution is employed in which a pedal force detecting means is provided to detect the pedal depressing force, and the throttle valve opening of the carburetor 47 is controlled to correspond to the output (pedal force) of the pedal force detecting means.

## Claims

1. A two-wheeled vehicle with a body frame (3), a front wheel (12) and a rear wheel (21) rotatably supported on said body frame (3), **characterized in that** an internal combustion engine (23) for driving said vehicle (1) is housed inside the rotation locus of one of said wheels (12, 21).

2. A two-wheeled vehicle according to claim 1, **characterized in that** said engine (23), a carburetor (47), an air cleaner (25), a silencer (24) and further auxiliary devices (26, 27, 28) are mounted fixedly to said vehicle (1) within the rotation locus of said rear wheel (21).

3. A two-wheeled vehicle according to claim 1 or 2, **characterized in that** said rear wheel (21) is a disk type rear wheel comprising:
a spoke portion (31) located with a displacement on one side in the vehicle width direction, between an outer circumferential rim (29) fitted with a tire (28) and a hub (30) located in the axialcenter area, and a shell (22) secured to the vehicle body frame (3) covering the spoke portion (31) from the other side in the vehicle width direction.

4. A two-wheeled vehicle according to one of the claims 1 to 3, **characterized in that** said two-wheeled vehicle is propellable by human power only, by engine power only, or in a state of combination of both, wherein the internal combustion engine is part of an auxiliary drive system.

5. A two-wheeled vehicle according to claim 4, **characterized in that** the drive power of the auxiliary drive system is responsive to the drive power of the human power drive system, in particular the revolution of the engine is manually changeable or controllable by pedal force detecting means, provided to detect a pedal depressing force.

6. A two-wheeled vehicle according to one of claims 3 to 5, **characterized in that** an output shaft (63) of the engine (23) is coupled through a transmitting device (19,36,37) to the hub (30), with a crankshaft (43) and the output shaft (63) of the engine (23) directed in the vehicle width direction.

7. A two-wheeled vehicle according to one of the claims 3 to 6, **characterized in that** a cylinder (42) of the engine (23) is disposed more forward of the vehicle body (3) than the hub (30) and
a transmission case (59) of the engine (23) holding the output shaft (63) is disposed below the hub (30).

8. A two-wheeled vehicle according to claim 7, **characterized in that** the crankshaft (43) of the engine (23) is formed in a cantilever type to connect a crank arm side end of the crankshaft (43) to the output shaft (63) within the transmission case (59) through a centrifugal clutch (61) and a small diameter gear (62a) disposed coaxially with the crankshaft (63) and a large diameter gear (62b) meshing with the small diameter gear (62a), and
an oil pump (77) is connected to the end of a crank pin (52) on the opposite side of a crank arm (51) through an eccentric type rotation transmitting mechanism (76).

9. A two-wheeled vehicle according to one of the claims 6 to 8, **characterized in that** a pedal crankshaft (15) for human power drive is rotatably disposed on the vehicle body frame (3),
a transmitting device of a chain type (19) is connected to the pedal crankshaft (15) through a drive sprocket (18) and a one-way clutch, and to the rear wheel hub (30) through a driven sprocket (36), and
an engine output sprocket (64) mounted on the engine output shaft (63) is made to engage with an intermediate portion of the chain (19) of the transmitting device.

10. A two-wheeled vehicle according to claim 9, **characterized in that** a self contained type multistage transmission (37) constituted to be accommodated in the hub (30) is interposed in the power transmitting path between the driven sprocket (36) and the hub (30).

11. A two-wheeled vehicle according to one of the claims 3 to 10, **characterized in that** a detachable supporting bracket (24) disposed in the space between the spoke portion (31) and the shell (22) is attached to the vehicle body frame (3) so that the engine (23), the air cleaner (25), the silencer (24), and the fuel tank (26) are supported on the vehicle body frame (3) through the supporting bracket (24).

12. A two-wheeled vehicle according to claim 11, **characterized in that** the supporting bracket (24) is formed in a generally sector shape in side view and disposed on the opposite side of the rear wheel spoke portion (31),
the central portion of the supporting bracket (24), together with the rear wheel shaft (34), is secured to the vehicle body frame (3),
the portion of the supporting bracket (24) near its outside circumference is secured to a chain stay (8) and a seat stay (9) of the vehicle body frame (3), and the engine cylinder (42) and the silencer (24) are disposed more toward the side of the spoke portion (31) than to the one of the supporting bracket (24).

13. A two-wheeled vehicle according to one of the claims 7 to 12, **characterized in that** the engine cylinder (42) and the silencer (24) are disposed on one side in the front-rear direction of the vehicle body (3) while the air cleaner (25) and the fuel tank (26) are disposed on the other side in the front-rear direction of the vehicle body (3).

14. A two-wheeled vehicle according to one of the claims 3 to 13, **characterized in that** a gap (D) is formed between the rear wheel (21) and the shell (22) along the outside circumferential rim (29) of the rear wheel (21) through which air can flow in and out.

15. A two-wheeled vehicle according to one of claims 3 to 14, **characterized in that** said auxiliary devices (24, 25, 26, 27, 47, 98) are arranged in a curved row in the circumferential direction of said rear wheel (21) between said spoke portion (31) and said shell (22).
